# EUROPEAN PATENT SPECIFICATION

(11) **EP 2 586 783 B1**
(45) Date of publication and mention of the grant of the patent: **05.08.2015**
(21) Application number: 11797804.9
(22) Date of filing: 17.06.2011
(51) Int. Cl.: C07F 7/18

(54) **METHOD FOR PRODUCING ALKOXY HYDROSILANE**
VERFAHREN ZUR HERSTELLUNG VON ALKOXYHYDROSILAN
PROCÉDÉ DE FABRICATION D'ALCOXY HYDROSILANE

(30) Priority: 22.06.2010 JP 2010141699
(43) Date of publication of application: 01.05.2013
(73) Proprietor: Kaneka Corporation, Kita-ku, Osaka 530-8288 (JP)
(72) Inventor: WAKABAYASHI, Katsuyu, Takasago-shi Hyogo 676-0027 (JP); HARUMASHI, Tatsuro, Takasago-shi Hyogo 676-0027 (JP)
(74) Representative: Hoffmann Eitle
(86) International application number: PCT/JP2011/003464
(87) International publication number: WO 2011/161915

(56) References cited:
- WO-A1-2010/004948
- US-A1- 2009 247 712
- PESTUNOVICH V.A. ET AL.: 'Pentacoordinate hydrochlorosilanes with lactamomethyl ligand' JOURNAL OF ORGANOMETALLIC CHEMISTRY vol. 692, no. 11, 2007, pages 2160 - 2167, XP022022456

## Description

### TECHNICAL FIELD

The present invention relates to a method for producing an organoalkoxyhydrosilane containing a hetero substituent at the α-position to the silicon.

### BACKGROUND ART

Alkoxyhydrosilanes (A) represented by formula (3):

H-SiR²_{c}(CR¹_{3-b}Y_{b})ₐ(OR⁸)_{3-a-c} (3)

in which R¹, R², R⁸, Y, a, b and c are as defined below are distinctive silane compounds characterized by bearing, on the silicon, an alkoxy group, a hydro group, and a hydrocarbon group containing a hetero substituent at the α-position (hereinafter, this hydrocarbon group may also be referred to as a heteromethyl group). Examples of usual methods for producing an alkoxysilane compound include those in which a corresponding chlorosilane is reacted with an alcohol. In the case of a silane compound containing an Si-H group, however, there is a problem that alkoxylation of the hydrosilyl group is likely to occur as a side reaction. Particularly in the case of the silane compound containing a heteromethyl group to be produced in the present invention, the side reaction is more likely to occur. Patent Literature 1 discloses a method in which an orthoester is used in place of the alcohol to produce that silane compound efficiently. Pestunovich et al. have discussed the synthesis and reaction behavior of pentacoordinate hydrochlorsilanes LCH2SiRHCl (L=2-piperidonyl ligand, R = ME, Ph, Bn) in "Pentacoordinate hydrochlorosilanes with lactamomethyl ligand", Journal of Organometallic Chemistry, 2007, Vol. 692, No. 11, p. 2160-2167.

### CITATION LIST

### PATENT LITERATURE

Patent Literature 1: WO 2010/004948

### SUMMARY OF INVENTION

### TECHNICAL PROBLEM

Claims and Examples in Patent Literature 1 describe that chloromethyldimethoxysilane can be efficiently obtained by reacting chloromethyldichlorosilane with trimethyl orthoformate. This is an exothermic reaction, and methyl chloride and methyl formate are generated as byproducts in equimolar amounts to the amount of Si-Cl. Thus, when the reaction is performed on a large scale, the control of the reaction temperature and the adjustment of the amount of evolved gas are important to safety. To address that problem, generally, the addition rate of the reactant is reduced, for example. However, the present inventors have found that decreasing the addition rate of trimethyl orthoformate in the above production method rather makes the alkoxylation of an Si-H group as a side reaction more likely. Meanwhile, currently, the price of trimethyl orthoformate is higher than that of methanol. The present invention aims to provide an industrially feasible method for producing a heteromethyl group-containing alkoxyhydrosilane.

### SOLUTION TO PROBLEM

As a result of extensive investigations to solve the problems, the present inventors have completed the invention described below.

Specifically, the present invention relates to the following (I) to (XI).
(I) A method for producing an alkoxyhydrosilane (A), comprising:
   a reaction (reaction 1) of a halohydrosilane (B) represented by formula (1):

      H-SiR²_{c}(CR¹_{3-b}Y_{b})ₐX_{3-a-c} (1)

      wherein each R¹ is independently a hydrogen atom or substituted or unsubstituted C₁₋₂₀ hydrocarbon group; each R² is independently a substituted or unsubstituted C₁₋₂₀ hydrocarbon group; each X is independently a halogen atom; Y is selected from a halogen atom, -OR³, -NR₄R₅, -N=R₆, -SR⁷ (wherein R³, R⁴, R⁵, and R⁷ are each a hydrogen atom or C₁₋₂₀ substituted or unsubstituted hydrocarbon group, and R⁶ is a divalent C₁₋₂₀ substituted or unsubstituted hydrocarbon group), a C₁₋₂₀ perfluoroalkyl group, and a cyano group; a
      is 1 or 2, b is 1, 2 or 3, and c is 1 or 0, provided that a+c is not more than 2,
      with an alcohol (C) represented by formula (2):

      R⁸OH (2)

      wherein R⁸ is a substituted or unsubstituted C₁₋₂₀ hydrocarbon group, in an amount of 0.50 to 0.99 molar equivalents relative to Xs of the halohydrosilane (B); followed by
      a reaction (reaction 2) with an orthoester (D) in an amount of 1.00 molar equivalent or more relative to the residual Si-X in the reaction mixture, to produce the alkoxyhydrosilane (A) represented by formula (3):

      H-SiR²_{c}(CR¹_{3-b}Y_{b})ₐ(OR⁸)_{3-a-c} (3)

      wherein R¹, R², R⁸, Y, a, b, and c are as defined above.
(II) The method for producing the silane compound according to (I),
   wherein the reaction 2 is performed after the residual amount of the alcohol (C) falls to less than 5% in the reaction 1.
(III) The method for producing the silane compound according to (I) or (II),
   wherein X is a chloro group.
(IV) The method for producing the silane compound according to any one of (I) to (III),
   wherein Y is a halogen atom.
(V) The method for producing the silane compound according to any one of (I) to (IV),
   wherein the halohydrosilane (B) is chloromethyldichlorosilane (ClCH₂SiHCl₂).
(VI) The method for producing the silane compound according to any one of (I) to (III),
   wherein Y is an alkoxy group (-OR³).
(VII) The method for producing the silane compound according to (VI),
   wherein R³ is a substituted or unsubstituted C₁₋₅ hydrocarbon group.
(VIII) The method for producing the silane compound according to (VI),
   wherein Y is a methoxy group.
(IX) The method for producing the silane compound according to any one of (I) to (VIII),
   wherein the alcohol (C) is methanol or ethanol.
(X) The method for producing the silane compound according to any one of (I) to (IX),
   wherein the orthoester (D) is a trialkyl orthoformate or a trialkyl orthoacetate.
(XI) The method for producing the silane compound according to any one of (I) to (X),
   wherein the reaction 2 includes adding the reaction mixture obtained in the reaction 1 to the orthoester.

### ADVANTAGEOUS EFFECTS OF INVENTION

The method for producing a silane compound according to the present invention enables to produce the desired product efficiently while controlling the reaction safely. Thus the method is economically advantageous and is suitable for industrialization.

### DESCRIPTION OF EMBODIMENTS

In the following, the present invention is described in detail.

The present invention relates to a method for producing an alkoxyhydrosilane compound (A) represented by formula (3):

H-SiR²_{c}(CR_{3-b}Y_{b})ₐ(OR⁸)_{3-a-c} (3)

wherein each R¹ is independently a hydrogen atom or substituted or unsubstituted C₁₋₂₀ hydrocarbon group; each R² is independently a substituted or unsubstituted C₁₋₂₀ hydrocarbon group; R⁸ is a substituted or unsubstituted C₁₋₂₀ hydrocarbon group; Y is selected from a halogen atom, - OR³, -NR⁴R⁵, -N=R⁶, -SR⁷ (wherein R³, R⁴, R⁵, and R⁷ are each a hydrogen atom or C₁₋₂₀ substituted or unsubstituted hydrocarbon group, and R⁶ is a divalent C₁₋₂₀ substituted or unsubstituted hydrocarbon group), a C₁₋₂₀ perfluoroalkyl group, and a cyano group (hereinafter, these are also referred to collectively as hetero substituents); a is 1 or 2, b is 1, 2 or 3, and c is 1 or 0, provided that a+c is not more than 2.

Specific examples of Y include, but not limited to, halogen substituents such as fluorine, chlorine, bromine, and iodine, alkoxy groups such as a methoxy group, an ethoxy group, a propoxy group, an isopropenyloxy group, and a phenoxy group, nitrogenous substituents such as a dimethylamino group, a diethylamino group, a 1-piperidino group, a methylethylketimino group, and a methylisobutylketimino group, sulfurous substituents such as a mercapto group, a methylthio group, and a phenylthio group, perfluoroalkyl groups such as a trifluoromethyl group and a pentafluoroethyl group, and a cyano group. Especially from the viewpoint of ease of synthesis, halogen substituents, alkoxy groups, and nitrogenous substituents are preferred, halogen substituents and alkoxy groups are more preferred, and a chloro group and a methoxy group are particularly preferred.

Specific examples of the substituent R¹ include, but not limited to, a hydrogen atom, a methyl group, an ethyl group, a propyl group, a vinyl group, and a phenyl group. Among these, a hydrogen atom is preferred because of the less steric hindrance effect and of easy availability.

Specific examples of the substituent R² include, but not limited to, a methyl group, an ethyl group, a propyl group, a vinyl group, an isopropenyl group, and a phenyl group. Among these, a methyl group is preferred because of the less steric hindrance effect and of easy availability.

Specific examples of the substituent R⁸ include, but not limited to, a methyl group, an ethyl group, a propyl group, a vinyl group, an isopropenyl group, and a phenyl group. Among these, a methyl group is preferred because the corresponding alkoxy group has high hydrolyzability. An ethyl group and an isopropenyl group are also preferred because hydrolysis of the corresponding alkoxy groups produces as a by-product ethanol and acetone, respectively, which have less impact on environment.

"a" is 1 or 2, and is preferably 1 from the viewpoint of availability.

"b" is 1, 2, or 3, and is preferably 1 from the viewpoint of ease of introduction.

"c" is 0 or 1, and is preferably 0 from the viewpoint of availability.

Specific examples of the alkoxyhydrosilane (A) to be obtained by the method for producing a silane compound according to the present invention include, but are not limited to, chloromethyldimethoxysilane (HSi(CH₂Cl)(OCH₃)₂), chloromethyldiethoxysilane (HSi(CH₂Cl) (OC₂H₅)₂), chloromethyldiisopropenoxysilane (HSi(CH₂Cl)(OC(CH₃)=CH₂)₂), dichloromethyldimethoxysilane (HSi(CHCl₂) (OCH₃)₂), trichloromethyldimethoxysilane (HSi(CCl₃) (OCH₃)₂), chloromethylmethoxymethylsilane (HSi(CH₂Cl) (OCH₃) (CH₃)), bis(chloromethyl)methoxysilane (HSi(CH₂Cl)₂(OCH₃)), 1-chloroethyldimethoxysilane (HSi(CH₂ClCH₃) (OCH₃)₂), fluoromethyldimethoxysilane (HSi(CH₂F)(OCH₃)₂), bromomethyldimethoxysilane (HSi (CH₂Br) (OCH₃)₂), iodomethyldimethoxysilane (HSi(CH₂I)(OCH₃)₂), 1-bromobenzyldimethoxysilane (HSi(CHBrC₆H₅) (OCH₃)₂), methoxymethyldimethoxysilane (HSi(CH₂OCH₃) (OCH₃)₂), ethoxymethyldimethoxysilane (HSi(CH₂OC₂H₅) (OCH₃)₂), 1-methoxyethyldimethoxysilane (HSi(CH(OCH₃)CH₃) (OCH₃)₂), N,N-diethylaminomethyldimethoxysilane (HSi (CH₂N (C₂H₅)₂) (OCH₃)₂), piperidinomethyldimethoxysilane (HSi (CH₂N (CH₂)₅) (OCH₃)₂), and mercaptomethyldimethoxysilane (HSi(CH₂SH) (OCH₃)₂). From the viewpoint of usefulness of the silane, chloromethyldimethoxysilane, chloromethyldiethoxysilane, chloromethyldiisopropenoxysilane, chloromethylmethoxymethylsilane, bis(chloromethyl)methoxysilane, 1-chloroethyldimethoxysilane, and methoxymethyldimethoxysilane are preferred, and chloromethyldimethoxysilane, chloromethyldiethoxysilane, methoxymethyldimethoxysilane, and 1-methoxyethyldimethoxysilane (HSi(CH(OCH₃)CH₃) (OCH₃)₂) are more preferred.

In the method for producing the alkoxyhydrosilane compound (A) according to the present invention, first, a halohydrosilane compound (B) represented by formula (1):

H-SiR²_{c}(CR¹_{3-b}Y_{b})ₐX_{3-a-c} (1)

(wherein R¹, R², Y, a, b, and c are as defined above, and each X is independently a halogen atom) is allowed to react with an alcohol (C) represented by formula (2):

R⁸OH (2)

(wherein R⁸ is a substituted or unsubstituted C₁₋₂₀ hydrocarbon group) in an amount of 0.50 to 0.99 molar equivalents relative to Xs of the halohydrosilane compound (B) (reaction 1).

X of the halohydrosilane (B) is any one of the following halogen atoms: fluorine, chlorine, bromine, and iodine. Chlorine is preferred because of easy availability.

The alcohol (C) is selected according to the target alkoxyhydrosilane (A). Specifically, C₁₋₅ alcohols such as methanol, ethanol, 1-propanol, and 2-propanol, phenol, and the like can be used. When the alcohol (C) is allowed to react, the presence of moisture in the alcohol (C) tends to cause condensation of the halohydrosilane (B), leading to reduction in the yield of the target alkoxyhydrosilane (A). For this reason, a dehydrated alcohol is preferably used.

Since the reactivity between an alcohol (C) and a halohydrosilane (B) is high, the chlorosilyl group can be rapidly converted to an alkoxysilyl group. However, alkoxylation of the hydrosilyl group as a side reaction is also likely to occur. In light of this, in the reaction 1 of the production method of the present invention, the alcohol (C) is preferably added to the halohydrosilane compound (B) at a controlled rate. The addition rate of the alcohol is preferably 0.1 molar equivalents/min to 0.0001 molar equivalents/min, and more preferably 0.05 molar equivalents/min to 0.0005 molar equivalents/min, relative to the total amount of chlorosilyl groups. If the addition rate is too high, the reaction may run away, and the amount of evolved gas may be too large, leading to increased risk of danger. In addition, alkoxylation of the hydrosilyl group as a side reaction is likely to occur. If the addition rate is too low, the reaction takes time, and productivity is thereby reduced. In order to allow the reaction to proceed efficiently, altering the addition rate of the alcohol is effective.

The lower limit of the temperature in the reaction 1 is preferably 0°C, more preferably 20°C, further preferably 40°C, and especially preferably 50°C. The upper limit is preferably 100°C, more preferably 80°C, and especially preferably 70°C. If the temperature is lower than the lower limit, the reactivity may be reduced, which may lead to a large amount of residual alcohol. In addition, the efficiency of removal of the generated hydrogen halide may be reduced, which may make the side reaction likely. If the temperature is higher than the upper limit, the hydrosilyl group is more likely to be alkoxylated.

The amount of the alcohol used in the reaction 1 is 0.50 to 0.99 molar equivalents relative to Xs of the halohydrosilane compound (B). The lower limit thereof is more preferably 0.60 molar equivalents, and especially preferably 0.70 molar equivalents. The upper limit thereof is more preferably 0.95 molar equivalents, further preferably 0.90 molar equivalents, and especially preferably 0.85 molar equivalents. If the amount of the alcohol is less than the lower limit, an increased amount of an orthoester is used in the below-mentioned reaction 2, which is economically disadvantageous. In addition, the effect of suppressing a side reaction in the reaction 2 is less likely to be obtained. If the amount of the alcohol is more than the upper limit, a side reaction in the reaction 1 is likely to occur, and therefore the yield of the product may be reduced.

In the reaction 1, by controlling the addition rate of the alcohol and efficiently removing evolved hydrogen chloride, it is possible to allow the reaction to proceed while suppressing a side reaction. In order to remove hydrogen chloride more efficiently, it is effective to stop adding the alcohol to heat the mixture for a certain period of time. The lower limit of the heating temperature is preferably 30°C, and more preferably 40°C. The upper limit is preferably 130°C, more preferably 100°C, and especially preferably 80°C. The removal efficiency is less likely to be increased at low temperature. Too high a temperature may allow a side reaction such as disproportionation to proceed. The lower limit of the period of time for the removal operation is preferably 1 minute, more preferably 10 minutes, and especially preferably 30 minutes. The upper limit is preferably 24 hours, more preferably 12 hours, and especially preferably 6 hours. If the period of time for the removal operation is short, hydrogen chloride may not be removed sufficiently. If the period of time for the removal operation is long, disproportionation of the silane compound may proceed.

In the present invention, the reaction 1 is followed by a reaction (reaction 2) with an orthoester (D) in an amount of 1.00 molar equivalent or more relative to the residual Si-X in the reaction mixture. This enables to complete the reaction while suppressing the alkoxylation of the hydrosilyl group as a side reaction.

As described above, if the halohydrosilane (B) is alkoxylated only with alcohol, the target alkoxyhydrosilane (A) cannot be obtained efficiently due to the side reaction. The document WO 2010/004948 discloses that an alkoxyhydrosilane (A) can be produced using only an orthoester. However, if the addition rate of the orthoester is reduced to control the reaction, a side reaction is likely to proceed as in the case of using only alcohol. This results not only in reduction in the yield of the target product, but also a need for using an excessive amount of the orthoester to complete the reaction, which is economically disadvantageous.

The document WO 2010/004948 also discloses a method in which both an alcohol and an orthoester are used together. Also in this case, reducing the addition rate tends to make a side reaction proceed. In the present invention, the residual amount of the alcohol at the start of the reaction 2 is preferably less than 5%, and more preferably less than 1%, of the total amount of the alcohol used. It is especially preferable that substantially no alcohol remain. If the residual amount of the alcohol is large, the effect of suppressing a side reaction is less likely to be obtained.

The amount of the residual Si-X and the residual amount of the alcohol can be determined by gas chromatography, NMR measurement, or the like. In the present invention, the amount of the residual Si-X is determined by NMR measurement.

If the addition rate of the orthoester (D) is too slow in the reaction 2, a side reaction is likely to proceed after all. Hence, the addition rate of the orthoester in the reaction 2 is preferably 0.001 molar equivalents/min relative to the total amount of chlorosilyl groups. If the addition rate is slower than this, a side reaction is likely to proceed and the effects of the present invention are less likely to be obtained.

If the control of the temperature and the adjustment of the amount of evolved gas in the reaction 2 are difficult due to a large amount of residual chlorosilyl groups, the methods described below can be preferably used. Here, the reaction mixture obtained after completion of the reaction 1 is referred to as the reaction mixture 1.
(1) A method in which the reaction mixture 1 is added to the orthoester (D).
(2) A method in which the orthoester is added to aliquots of the reaction mixture 1.
(3) A method in which a reaction of the reaction mixture 1 with the orthoester is performed as a continuous reaction.

These methods enable to produce the alkoxyhydrosilane (A) efficiently by suppressing a side reaction while controlling the reaction temperature and the amount of evolved gas.

The amount of the orthoester (D) needs to be 1.00 molar equivalent or more, and is preferably 1.05 to 5.0 molar equivalents, and more preferably 1.1 to 2.0 molar equivalents, relative to the residual Si-X.

The upper limit of the reaction temperature in the reaction 2 is preferably 100°C, and more preferably 80°C. The lower limit thereof is preferably 0°C, more preferably 20°C, and especially preferably 40°C. If the reaction temperature is higher than the upper limit, the hydrosilyl group is likely to be alkoxylated, and the yield of the alkoxyhydrosilane (A) tends to be reduced. If the reaction temperature is lower than the lower limit, the reactivity may be reduced so that it may take time to complete the reaction. In addition, some chlorosilyl groups may remain so that the reaction may not be completed.

The orthoester (D) is a compound represented by formula (4):

R⁹-C(OR⁸)₃ (4)

wherein R⁸ is as defined above, and each R⁹ is independently a hydrogen atom or substituted or unsubstituted C₁₋₂₀ hydrocarbon group. R⁸ of the orthoester (D) is selected according to the target alkoxyhydrosilane (A). Examples of R⁹ include, but not limited to, hydrogen, a methyl group, an ethyl group, and a phenyl group. R⁹ is preferably hydrogen or a methyl group because such compounds are easily available and have high activity. A methyl group is preferred because such compounds have especially high activity.

Specific examples of the orthoester include, but are not limited to, trimethyl orthoformate, triethyl orthoformate, triisopropyl orthoformate, trimethyl orthoacetate, triethyl orthoacetate, trimethyl orthopropionate, and trimethyl orthobenzoate. In terms of easy availability, trimethyl orthoformate, triethyl orthoformate, and trimethyl orthoacetate are preferred, and trimethyl orthoformate and trimethyl orthoacetate are more preferred. In terms of high reactivity, trimethyl orthoformate, triethyl orthoformate, trimethyl orthoacetate, and triethyl orthoacetate are preferred, and trimethyl orthoacetate is most preferred.

In the method for producing a silane compound according to the present invention, a solvent may be used.

The reaction can be performed in any atmosphere, and is preferably performed in an atmosphere such as dry air, nitrogen, argon, or the like. Dry nitrogen is more preferred because it is easy to manage and is also economical.

The alkoxyhydrosilane (A) to be produced by the present invention can be used for, as described above, a hydrosilylation reaction using an Si-H group, hydrolysis and condensation reactions using an Si-OR⁸ group, and the like. Furthermore, the heteromethyl group of the alkoxyhydrosilane (A) can be used for conversion to another substituent and also can enhance the reactivity of a hydrolyzable group on the silicon. Also, when the chloromethyl group is allowed to react with Mg, the alkoxyhydrosilane can then be used as a Grignard reagent, as suggested in, for example, JP S59-148791 A and JP H02-270889 A.

Specific examples of uses of the alkoxyhydrosilane compound (A) include, but are not limited to, the following (1) and (2). (1) The alkoxyhydrosilane compound (A) is addition-reacted with an unsaturated group-containing compound via hydrosilylation to provide a reactive silyl group-containing compound having high hydrolyzability. For example, 3-chloropropyl(chloromethyl)dimethoxysilane can be obtained by addition-reacting chloromethyldimethoxysilane with allyl chloride via hydrosilylation. This product can be used as a so-called silane coupling agent or a material for silane coupling agents, which has both a hydrolyzable silyl group and another reactive group. The silane coupling agent thus obtained is considered to exhibit higher hydrolyzability due to the heteromethyl group on the silicon. Alternatively, the unsaturated group-containing compound may be a polymeric compound. For example, if the alkoxyhydrosilane (A) produced by the method of the present invention is used for introduction of a reactive silyl group to prepare a reactive silyl group-containing polymer as disclosed in JP S52-73998 A or the like, the obtained reactive silyl group-containing polymer has very high reactivity and good handleability. The reactive silyl group-containing polymer can be used for sealing materials and adhesives. (2) A hydrolyzable silyl group-containing compound obtained in the same manner as in (1) is converted into a siloxane compound by hydrolysis and condensation reactions. Then, the halomethyl group is converted to a desired substituent (for example, the chloromethyl group can be converted to a diethylaminomethyl group) by nucleophilic substitution or the like reaction.

The Si-H, Si-OR⁸, and heteromethyl groups of the alkoxyhydrosilane compound (A) can be used in any order.

### EXAMPLES

Chloromethyldichlorosilane used in examples was synthesized based on the production method disclosed in WO 2010/004948.

### (Comparative Example 1)

Boiling chips were put into a reactor, and the air in the reactor was replaced with dry nitrogen. The reactor was then charged with 120 mmol of chloromethyldichlorosilane, and the temperature was maintained at around 60°C. Then, methanol (dehydrated, produced by Wako Pure Chemical Industries, Ltd.) was added into the liquid chlorosilane using a syringe pump at an addition rate of 0.006 molar equivalents/min until the amount of methanol added reached 0.6 molar equivalents relative to the Si-Cl of the chloromethyldichlorosilane, then at 0.003 molar equivalents/min until the added amount reached 0.8 molar equivalents, and then at 0.002 molar equivalents/min until the added amount reached 1 molar equivalent. After completion of the addition, the NMR spectrum of the reaction mixture was measured. The results show that the proportion of chloromethyldimethoxysilane (ClCH₂Si(OCH₃)₂H) formed was 56 mol%, and that of chloromethyltrimethoxysilane (ClCH₂Si(OCH₃)₃) formed was 23 mol%, and at the same time, chloromethylchloromethoxysilane (ClCH₂SiCl(OCH₃)H) (18 mol%), chloromethylchlorodimethoxysilane (ClCH₂SiCl(OCH₃)₂) (1 mol%) and other chlorosilanes remained. Further, methanol was added at an addition rate of 0.002 molar equivalents/min until the added amount reached 1.1 molar equivalents. As a result, the proportion of chloromethyldimethoxysilane formed dropped to 47 mol%, and that of chloromethyltrimethoxysilane was 38 mol%.

### (Comparative Example 2)

Boiling chips were put into a reactor, and the air in the reactor was replaced with dry nitrogen. The reactor was then charged with 100 mmol of chloromethyldichlorosilane, and the temperature was maintained at around 50°C. Then, 1.2 molar equivalents of trimethyl orthoformate (produced by Wako Pure Chemical Industries, Ltd.) was added using a syringe pump at an addition rate of 0.080 molar equivalents/min relative to the Si-Cl of the chloromethyldichlorosilane. After completion of the addition, the NMR spectrum of the reaction mixture was measured. The results show that the proportion of chloromethyldimethoxysilane (ClCH₂Si(OCH₃)₂H) formed was 64 mol%, and that of chloromethyltrimethoxysilane (ClCH₂Si(OCH₃)₃) formed was 6 mol%, and at the same time, chloromethylchloromethoxysilane (ClCH₂SiCl (OCH₃) H) (7mol%), chloromethyldichloromethoxysilane (ClCH₂SiCl₂(OCH₃)) (17mol%) and other chlorosilanes remained.

### (Comparative Example 3)

Boiling chips were put into a reactor, and the air in the reactor was replaced with dry nitrogen. The reactor was then charged with 200 mmol of chloromethyldichlorosilane, and the temperature was maintained at around 60°C. Then, 400 mmol of trimethyl orthoformate (produced by Wako Pure Chemical Industries, Ltd.) was added using a syringe pump at an addition rate of 0.008 molar equivalents/min relative to the Si-Cl of the chloromethyldichlorosilane. Then, 400 mmol of methanol (dehydrated) was added at an addition rate of 0.006 molar equivalents/min. After completion of the addition, the NMR spectrum of the reaction mixture was measured. The results show that the proportion of chloromethyldimethoxysilane (ClCH₂Si(OCH₃)₂H) formed was 29 mol%, and that of chloromethyltrimethoxysilane (ClCH₂Si(OCH₃)₃) formed was 71 mol%.

### (Example 1)

Boiling chips were put into a reactor, and the air in the reactor was replaced with dry nitrogen. The reactor was then charged with 200 mmol of chloromethyldichlorosilane, and the temperature was maintained at around 60°C. Then, methanol (dehydrated) was added into the liquid chlorosilane using a syringe pump at an addition rate of 0.005 molar equivalents/min until the amount of methanol added reached 0.52 molar equivalents relative to the Si-Cl of the chloromethyldichlorosilane, then at 0.002 molar equivalents/min until the added amount reached 0.78 molar equivalents, and then at 0.0008 molar equivalents/min until the added amount reached 0.91 molar equivalents. After completion of the addition, the NMR spectrum of the reaction mixture was measured to determine that no methanol remained. Then, trimethyl orthoformate in an amount of 0.15 molar equivalents relative to the initial amount of Si-Cl of the charged chloromethyldichlorosilane was added using a syringe pump. The addition rate was set to 0.009 molar equivalents/min. After completion of the addition, the NMR spectrum of the reaction mixture was measured. The results show that the proportion of chloromethyldimethoxysilane (ClCH₂Si(OCH₃)₂H) formed was 85 mol%, that of chloromethyltrimethoxysilane (ClCH₂Si(OCH₃)₃) formed was 14 mol%, and that of chloromethylchloromethoxysilane (ClCH₂SiCl(OCH₃)H) formed was 1 mol%.

### (Example 2)

Boiling chips were put into a reactor, and the air in the reactor was replaced with dry nitrogen. The reactor was then charged with 200 mmol of chloromethyldichlorosilane, and the temperature was maintained at around 60°C. Then, methanol (dehydrated) was added into the liquid chlorosilane using a syringe pump at an addition rate of 0.006 molar equivalents/min until the amount of methanol added reached 0.51 molar equivalents relative to the Si-Cl of the chloromethyldichlorosilane, and then at 0.003 molar equivalents/min until the added amount reached 0.81 molar equivalents. After completion of the addition, the NMR spectrum of the reaction mixture was measured to determine that no methanol remained. Then, trimethyl orthoformate in an amount of 0.25 molar equivalents relative to the initial amount of Si-Cl of the charged chloromethyldichlorosilane was added using a syringe pump. The addition rate was set to 0.008 molar equivalents/min. After completion of the addition, the NMR spectrum of the reaction mixture was measured. The results show that the proportion of chloromethyldimethoxysilane (ClCH₂Si(OCH₃)₂H) formed was 89 mol%, that of chloromethyltrimethoxysilane (ClCH₂Si(OCH₃)₃) formed was 10 mol%, and that of chloromethyldichloromethoxysilane (ClCH₂SiCl₂(OCH₃)) formed was 1 mol%.

### (Comparative Example 4)

Boiling chips were put into a reactor, and the air in the reactor was replaced with dry nitrogen. The reactor was then charged with 200 mmol of chloromethyldichlorosilane, and the temperature was maintained at around 60°C. Then, a mixture preliminarily prepared by mixing 320 mmol of methanol (dehydrated) with 100 mmol of trimethyl orthoformate was added into the liquid chlorosilane using a syringe pump. Half of the mixture was added over 2 hours, and the remaining half was added over 4 hours. After completion of the addition, the NMR spectrum of the reaction mixture was measured. The results show that the proportion of chloromethyldimethoxysilane (ClCH₂Si(OCH₃)₂H) formed was 85 mol%, that of chloromethyltrimethoxysilane (ClCH₂Si(OCH₃)₃) formed was 6 mol%, and that of chloromethylchloromethoxysilane (ClCH₂SiCl(OCH₃)H) was 9 mol%. Though the amounts of methanol and trimethyl orthoformate added were almost the same as those in Example 2, a large amount of chloromethylchloromethoxysilane remained.

### (Example 3)

Boiling chips were put into a reactor, and the air in the reactor was replaced with dry nitrogen. The reactor was then charged with 200 mmol of chloromethyldichlorosilane, and the temperature was maintained at around 70°C. Then, methanol (dehydrated) was added into the liquid chlorosilane using a syringe pump at an addition rate of 0.004 molar equivalents/min until the amount of methanol added reached 0.72 molar equivalents relative to the Si-Cl of the chloromethyldichlorosilane, and then at 0.0008 molar equivalents/min until the added amount reached 0.92 molar equivalents. After completion of the addition, the NMR spectrum of the reaction mixture was measured to determine that no methanol remained. Then, trimethyl orthoacetate in an amount of 0.11 molar equivalents relative to the initial amount of Si-Cl of the charged chloromethyldichlorosilane was added using a syringe pump. The addition rate was set to 0.005 molar equivalents/min. After completion of the addition, the NMR spectrum of the reaction mixture was measured. The results show that the proportion of chloromethyldimethoxysilane (ClCH₂Si(OCH₃)₂H) formed was 91 mol%, and that of chloromethyltrimethoxysilane (ClCH₂Si(OCH₃)₃) formed was 9 mol%. By using trimethyl orthoacetate, the reaction proceeded promptly and no chlorosilyl group remained.

### (Example 4)

Boiling chips were put into a reactor, and the air in the reactor was replaced with dry nitrogen. The reactor was then charged with 200 mmol of chloromethyldichlorosilane, and the temperature was maintained at around 60°C. Then, methanol (dehydrated) was added into the liquid chlorosilane using a syringe pump at an addition rate of 0.004 molar equivalents/min until the amount of methanol added reached 0.50 molar equivalents relative to the Si-Cl of the chloromethyldichlorosilane, then at 0.002 molar equivalents/min until the added amount reached 0.77 molar equivalents, and then at 0.001 molar equivalents/min until the added amount reached 0.80 molar equivalents. After completion of the addition, the NMR spectrum of the reaction mixture was measured to determine that no methanol remained. Then, the reaction mixture was temporarily transferred to another container. Trimethyl orthoacetate in an amount of 0.23 molar equivalents relative to the initial amount of Si-Cl of the charged chloromethyldichlorosilane was then injected into the reactor, and the temperature was maintained at around 60°C. The reaction mixture in the another container was then slowly added to the liquid trimethyl orthoacetate in the reactor. The addition period of time was about 30 minutes. After completion of the addition, the NMR spectrum of the resultant reaction mixture was measured. The results show that the proportion of chloromethyldimethoxysilane (ClCH₂Si(OCH₃)₂H) formed was 95 mol%, and that of chloromethyltrimethoxysilane (ClCH₂Si(OCH₃)₃) formed was 5 mol%.

### (Example 5)

Boiling chips were put into a reactor, and the air in the reactor was replaced with dry nitrogen. The reactor was then charged with 580 mmol of chloromethyldichlorosilane, and the temperature was maintained at around 60°C. Then, methanol (dehydrated) was added into the liquid chlorosilane using a syringe pump at an addition rate of 0.007 molar equivalents/min until the amount of methanol added reached 0.50 molar equivalents relative to the Si-Cl of the chloromethyldichlorosilane. After completion of the addition, hydrogen chloride was removed for 30 minutes by heating while maintaining the temperature at 60°C. Then, methanol was added into the liquid chlorosilane in the same manner as above, at an addition rate of 0.005 molar equivalents/min until the added amount reached 0.75 molar equivalents. After completion of the addition, hydrogen chloride was removed for 30 minutes by heating in the same manner as above. The NMR spectrum of the reaction mixture was then measured to determine that no methanol remained. Then, trimethyl orthoacetate was added into the liquid chlorosilane at an addition rate of 0.004 molar equivalents/min until the added amount reached 0.27 molar equivalents relative to the initial amount of Si-Cl of the charged chloromethyldichlorosilane. The temperature during the addition was maintained at around 60°C. After completion of the addition, the NMR spectrum of the reaction mixture was measured. The results show that the proportion of chloromethyldimethoxysilane (ClCH₂Si(OCH₃)₂H) formed was 98 mol%, and that of chloromethyltrimethoxysilane (ClCH₂Si(OCH₃)₃) formed was 2 mol%.

### (Example 6)

Methoxymethyltrimethoxysilane was prepared based on the method disclosed in Example 2 of JP 2007-513203 T. Then, the methoxymethyltrimethoxysilane was allowed to react with 4 molar equivalents of acetyl chloride in the presence of 0.02 molar equivalents of zinc chloride as a catalyst. The mixture was reacted for 36 hours while being heated at reflux, to synthesize methoxymethyltrichlorosilane.

The methoxymethyltrichlorosilane was purified by distillation, and mixed with 1 molar equivalent of methyldichlorosilane. Then, 0.05 molar equivalents of methyltributylammonium chloride was added to the mixture, and the resultant mixture was reacted for 3 hours while being heated at reflux, to yield methoxymethyldichlorosilane (CH₃OCH₂SiCl₂H) at a conversion rate of about 50%.

Boiling chips were put into a reactor, and the air in the reactor was replaced with dry nitrogen. The reactor was then charged with 400 mmol of the methoxymethyldichlorosilane purified by distillation, and the temperature was maintained at around 60°C. Then, using a syringe pump at an addition rate of 4 mmol/min. After completion of the addition, hydrogen chloride was removed for 30 minutes by heating while maintaining the temperature at 60°C. Then, 240 mmol of methanol (dehydrated) was added into the liquid chlorosilane at an addition rate of 2 mmol/min in the same manner as above. After completion of the addition, hydrogen chloride was removed for 30 minutes by heating in the same manner as above. The NMR spectrum of the reaction mixture was then measured to determine that no methanol remained. Then, 200 mmol of trimethyl orthoacetate was added at an addition rate of 4 mmol/min into the liquid chlorosilane. The temperature during the addition was maintained at around 60°C. After completion of the addition, the NMR spectrum of the reaction mixture was measured. The results of the proportion of each silane show that the proportion of methoxymethyldimethoxysilane (CH₃OCH₂Si(OCH₃)₂H) was 98 mol%, and that of methoxymethyltrimethoxysilane (CH₃OCH₂Si(OCH₃)₃) was 2 mol%.

### INDUSTRIAL APPLICABILITY

The alkoxyhydrosilane (A) to be produced by the method of the present invention can be used for a hydrosilylation reaction using an Si-H group, hydrolysis and condensation reactions using an Si-OR⁸ group, and the like. Furthermore, the heteromethyl group of the alkoxyhydrosilane (A) can be used for conversion to another substituent and also can enhance the reactivity of a hydrolyzable group on the silicon. Also, when the chloromethyl group is allowed to react with Mg, the alkoxyhydrosilane (A) can then be used as a Grignard reagent, as suggested in, for example, JP S59-148791 A and JP H02-270889 A.

## Claims

1. A method for producing an alkoxyhydrosilane (A), comprising:
a reaction (reaction 1) of a halohydrosilane (B) represented by formula (1):
H-SiR²_{c}(CR¹_{3-b}Y_{b})ₐX_{3-a-c} (1)
wherein each R¹ is independently a hydrogen atom or substituted or unsubstituted C₁₋₂₀ hydrocarbon group; each R² is independently a substituted or unsubstituted C₁₋₂₀ hydrocarbon group; each X is independently a halogen atom; Y is selected from a halogen atom, -OR³, -NR⁴R⁵, -N=R⁶, -SR⁷ (wherein R³, R⁴, R⁵, and R⁷ are each a hydrogen atom or C₁₋₂₀ substituted or unsubstituted hydrocarbon group, and R⁶ is a divalent C₁₋₂₀ substituted or unsubstituted hydrocarbon group), a C₁₋₂₀ perfluoroalkyl group, and a cyano group; a is 1 or 2, b is 1, 2 or 3, and c is 1 or 0, provided that a+c is not more than 2,
with an alcohol (C) represented by formula (2):
R⁸OH (2)
wherein R⁸ is a substituted or unsubstituted C₁₋₂₀ hydrocarbon group, in an amount of 0.50 to 0.99 molar equivalents relative to Xs of the halohydrosilane (B); followed by
a reaction (reaction 2) with an orthoester (D) in an amount of 1.00 molar equivalent or more relative to the residual Si-X in the reaction mixture, to produce the alkoxyhydrosilane (A) represented by formula (3):
H-SiR²_{c} (CR¹_{3-b}Y_{b})a (OR⁸)_{3-a-c} (3)
wherein R¹, R², R⁸, Y, a, b, and c are as defined above.

2. The method for producing the silane compound according to claim 1,
wherein the reaction 2 is performed after the residual amount of the alcohol (C) falls to less than 5% in the reaction 1.

3. The method for producing the silane compound according to claim 1 or 2,
wherein X is a chloro group.

4. The method for producing the silane compound according to any one of claims 1 to 3,
wherein Y is a halogen atom.

5. The method for producing the silane compound according to any one of claims 1 to 4,
wherein the halohydrosilane (B) is chloromethyldichlorosilane (ClCH₂SiHCl₂).

6. The method for producing the silane compound according to any one of claims 1 to 3,
wherein Y is an alkoxy group (-OR³).

7. The method for producing the silane compound according to claim 6,
wherein R³ is a substituted or unsubstituted C₁₋₅ hydrocarbon group.

8. The method for producing the silane compound according to claim 6,
wherein Y is a methoxy group.

9. The method for producing the silane compound according to any one of claims 1 to 8,
wherein the alcohol (C) is methanol or ethanol.

10. The method for producing the silane compound according to any one of claims 1 to 9,
wherein the orthoester (D) is a trialkyl orthoformate or a trialkyl orthoacetate.

11. The method for producing the silane compound according to any one of claim 1 to 10,
wherein the reaction 2 includes adding the reaction mixture obtained in the reaction 1 to the orthoester.

## Patentansprüche

1. Verfahren zur Herstellung eines Alkoxyhydrosilans (A), umfassend:
eine Reaktion (Reaktion 1) eines Halohydrosilans (B), dargestellt durch die Formel (1):
H-SiR²_{c}(CR¹_{3-b}Y_{b})ₐX_{3-a-c} (1)
worin jedes R¹ unabhängig ein Wasserstoffatom oder eine substituierte oder unsubstituierte C₁₋₂₀-Kohlenwasserstoffgruppe ist; jedes R² unabhängig eine substituierte oder unsubstituierte C₁₋₂₀-Kohlenwasserstoffgruppe ist; jedes X unabhängig ein Halogenatom ist; Y ausgewählt ist aus einem Halogenatom, -OR³, -NR⁴R⁵, -N-=R⁶, -SR⁷ (worin R³, R⁴, R⁵ und R⁷ jeweils ein Wasserstoffatom oder eine substituierte oder unsubstituierte C₁₋₂₀-Kohlenwasserstoffgruppe sind, und R⁶ eine divalente, substituierte oder unsubstituierte C₁₋₂₀-Kohlenwasserstoffgruppe ist), einer C₁₋₂₀-Perfluoralkylgruppe und einer Cyanogruppe; a 1 oder 2 ist, b 1, 2 oder 3 ist und c 1 oder 0 ist, vorausgesetzt, dass a+c nicht mehr als 2 ist,
mit einem Alkohol (C), dargestellt durch Formel (2):
R⁸OH (2)
worin R⁸ eine substituierte oder unsubstituierte C₁₋₂₀-Kohlenwasserstoffgruppe ist, in einer Menge von 0,50 bis 0,99 Moläquivalenten relativ zu den X des Halohydrosilans (B);
gefolgt von
einer Reaktion (Reaktion 2) mit einem Orthoester (D) in einer Menge von 1,00 Moläquivalent oder mehr, relativ zu den verbleibenden Si-X in der Reaktionsmischung, um das Alkoxyhydrosilan (A) herzustellen, das durch die Formel (3) dargestellt wird:
H-SiR²_{c}(CR¹_{3-b}Y_{b})ₐ(OR⁸)_{3-a-c} (3)
worin R¹, R², R⁸, Y, a, b und c wie vorstehend definiert sind.

2. Verfahren zur Herstellung der Silanverbindung gemäß Anspruch 1, worin die Reaktion 2 durchgeführt wird, nachdem die Restmenge des Alkohols (C) auf weniger als 5 % in der Reaktion 1 gefallen ist.

3. Verfahren zur Herstellung der Silanverbindung gemäß Anspruch 1 oder 2, worin X eine Chlorgruppe ist.

4. Verfahren zur Herstellung der Silanverbindung gemäß irgendeinem der Ansprüche 1 bis 3, worin Y ein Halogenatom ist.

5. Verfahren zur Herstellung der Silanverbindung gemäß irgendeinem der Ansprüche 1 bis 4, worin das Halohydrosilan (B) Chlormethyldichlorsilan (ClCH₂SiHCl₂) ist.

6. Verfahren zur Herstellung der Silanverbindung gemäß irgendeinem der Ansprüche 1 bis 3, worin Y eine Alkoxygruppe (-OR³) ist.

7. Verfahren zur Herstellung der Silanverbindung gemäß Anspruch 6, worin R³ eine substituierte oder unsubstituierte C₁₋₅-Kohlenwasserstoffgruppe ist.

8. Verfahren zur Herstellung der Silanverbindung gemäß Anspruch 6, worin Y eine Methoxygruppe ist.

9. Verfahren zur Herstellung der Silanverbindung gemäß irgendeinem der Ansprüche 1 bis 8, worin der Alkohol (C) Methanol oder Ethanol ist.

10. Verfahren zur Herstellung der Silanverbindung gemäß irgendeinem der Ansprüche 1 bis 9,
worin der Orthoester (D) ein Trialkylorthoformiat oder ein Trialkylorthoacetat ist.

11. Verfahren zur Herstellung der Silanverbindung gemäß irgendeinem der Ansprüche 1 bis 10, worin die Reaktion 2 das Zugeben der in der Reaktion 1 erhaltenen Reaktionsmischung zu dem Orthoester umfasst.

## Revendications

1. Procédé permettant de produire un alcoxyhydrosilane (A), comprenant :
une réaction (réaction 1) d'un halohydrosilane (B) représenté par la formule (1) :
H-SiR²_{c} (CR¹_{3-b}Y_{b})ₐ X_{3-a-c} (1)
où chaque R¹ est indépendamment un atome d'hydrogène ou un groupe hydrocarboné en C₁ à C₂₀ substitué ou non substitué ; chaque R² est indépendamment un groupe hydrocarboné en C₁ à C₂₀ substitué ou non substitué ; chaque X est indépendamment un atome d'halogène ; Y est choisi parmi un atome d'halogène, -OR³, -NR⁴R⁵, -N=R⁶, -SR⁷ (où R³, R⁴, R⁵ et R⁷ sont chacun un atome d'hydrogène ou un groupe hydrocarboné en C₁ à C₂₀ substitué ou non substitué, et R⁶ est un groupe hydrocarboné en C₁ à C₂₀ divalent substitué ou non substitué), un groupe perfluoroalkyle en C₁ à C₂₀, et un groupe cyano ; a est égal à 1 ou 2, b est égal à 1, 2 ou 3, et c est égal à 0 ou 1, à condition que a+c ne soit pas supérieur à 2,
avec un alcool (C) représenté par la formule (2) :
R⁸OH (2)
où R⁸ est un groupe hydrocarboné en C₁ à C₂₀ substitué ou non substitué, en une quantité allant de 0,50 à 0,99 équivalent molaire par rapport à Xs de l'halohydrosilane (B) ;
suivie par ;
une réaction (réaction 2) avec un orthoester (D) en une quantité de 1,00 équivalent molaire ou plus par rapport au Si-X résiduel dans le mélange réactionnel, pour produire l'alcoxyhydrosilane (A) représenté par la formule (3) :
H-SiR²_{c} (CR¹_{3-b}Y_{b})ₐ (OR⁸)_{3-a-c} (3)
où R¹, R², R⁸, Y, a, b, et c sont tels que définis ci-dessus.

2. Procédé permettant de produire le composé de silane selon la revendication 1,
dans lequel la réaction 2 est réalisée après que la quantité résiduelle de l'alcool (C) tombe à moins de 5% dans la réaction 1.

3. Procédé permettant de produire le composé de silane selon la revendication 1 ou 2,
dans lequel X est un groupe chloro.

4. Procédé permettant de produire le composé de silane selon l'une quelconque des revendications 1 à 3,
dans lequel Y est un atome d'halogène.

5. Procédé permettant de produire le composé de silane selon l'une quelconque des revendications 1 à 4,
dans lequel l'halohydrosilane (B) est du chlorométhyldichlorosilane (ClCH₂SiHCl₂).

6. Procédé permettant de produire le composé de silane selon l'une quelconque des revendications 1 à 3,
dans lequel Y est un groupe alcoxy (-OR³).

7. Procédé permettant de produire le composé de silane selon la revendication 6,
dans lequel R³ est un groupe hydrocarboné en C₁ à C₅ substitué ou non substitué.

8. Procédé permettant de produire le composé de silane selon la revendication 6,
dans lequel Y est un groupe méthoxy.

9. Procédé permettant de produire le composé de silane selon l'une quelconque des revendications 1 à 8,
dans lequel l'alcool (C) est le méthanol ou l'éthanol.

10. Procédé permettant de produire le composé de silane selon l'une quelconque des revendications 1 à 9,
dans lequel l'orthoester (D) est un orthoformiate de trialkyle ou un orthoacétate de trialkyle. koxy

11. Procédé permettant de produire le composé de silane selon l'une quelconque des revendications 1 à 10,
dans lequel la réaction 2 comporte l'addition du mélange réactionnel obtenu dans la réaction 1 à l'orthoester.
